# EUROPÄISCHE PATENTSCHRIFT

(11) **EP 1 982 238 B1**
(45) Veröffentlichungstag und Bekanntmachung des Hinweises auf die Patenterteilung: **03.06.2009**
(21) Anmeldenummer: 07703585.5
(22) Anmeldetag: 02.01.2007
(51) Int. Cl.: G05B 9/03

(54) **STEUERVERFAHREN UND PROZESSORSYSTEM DAFÜR**
CONTROL METHOD AND PROCESSOR SYSTEM THEREFOR
PROCÉDÉ DE COMMANDE ET SYSTÈME DE PROCESSEUR ASSOCIÉ

(30) Priorität: 01.02.2006 DE 102006004985
(43) Veröffentlichungstag der Anmeldung: 22.10.2008
(73) Patentinhaber: Robert Bosch GmbH, 70442 Stuttgart (DE)
(72) Erfinder: WEIBERLE, Reinhard, 71665 Vaihingen/Enz (DE); MUELLER, Bernd, 70839 Gerlingen (DE)
(86) Internationale Anmeldenummer: PCT/EP2007/050009
(87) Internationale Veröffentlichungsnummer: WO 2007/088075

(56) Entgegenhaltungen:
- EP-A- 0 394 514
- EP-A- 1 302 826
- WO-A-20/05003869
- US-B1- 6 615 366

## Beschreibung

### Stand der Technik

Die vorliegende Erfindung betrifft ein Verfahren zum Steuern einer Maschine unter Verwendung eines Prozessorsystems mit mehreren Ausführungseinheiten und ein zur Ausführung des Verfahrens geeignetes Prozessorsystem.

Multiprozessorsysteme für die Steuerung von Maschinen aller Art stoßen insbesondere bei sicherheitskritischen Anwendungen auf zunehmendes Interesse, da sie es erlauben, gleiche Befehle von zwei oder mehr Prozessoren gleichzeitig ausführen zu lassen und durch einen Vergleich der Ergebnisse, die bei Gleichheit der verwendeten Ausgangsdaten identisch sein sollten, eine Störung des Prozessorsystems zu erkennen.

In einem gegebenen Steuerverfahren sind nicht alle Berechnungen, die von dem Prozessorsystem durchgeführt werden, in gleicher Weise sicherheitsrelevant. Während bei Entscheidungsprozessen zwischen mehreren diskreten Alternativen, die für längere Zeit Gültigkeit behalten, eine vom Prozessorsystem fehlerhaft getroffene Entscheidung fatale Folgen haben kann und daher für eine solche Entscheidung ein höchstmögliches Maß an Sicherheit zu verlangen ist, haben bei der Berechnung von häufig neu berechneten Steuergrößen vereinzelte Falschberechnungen keine maßgeblichen Auswirkungen und können daher toleriert werden. Es ist daher bereits in DE 103 32 700 A1 ein Prozessorsystem vorgeschlagen worden, das eine Umschaltung zwischen einem Sicherheitsbetriebsmodus, in welchem hoch sicherheitsrelevante Steuergrößen von zwei Prozessoren redundant berechnet werden, um Fehler bei der Berechnung sofort zu erkennen, und einem Leistungsbetriebsmodus umschaltbar ist, in welchem die Ausführungseinheiten des Systems unterschiedliche Befehle ausführen können, so dass Steuerinformation, die nicht so sicherheitsrelevant ist, dass sie im Sicherheitsmodus berechnet werden müsste, in kurzer Zeit und unter effektiver Ausnutzung der Rechenleistung des Prozessorsystems ermittelt werden kann. Zwar sind Fehler des Prozessorsystems in dem Leistungsmodus nicht nachweisbar, doch ist dies nicht weiter kritisch, so lange es sich um vereinzelte Fehler handelt, die beispielsweise auf eine spontane Bit-Umkehr in einem Register des Prozessorsystems zurückgehen und durch Neuberechnung der entsprechenden Steuergröße alsbald korrigiert werden. Wenn eine der Ausführungseinheiten des Systems einen dauerhaften Defekt aufweist, so wird dies erkannt, wenn System in den Sicherheitsmodus übergeht. Ein solcher Fehler bleibt daher zwar nicht dauerhaft unerkannt, doch kann es dennoch zu einer fatalen Fehlsteuerung kommen, wenn das Prozessorsystem lange Zeit kontinuierlich im Leistungsbetriebsmodus arbeitet.

Dokument EP-A- 0 394 514 offenbart ein Verfahren zum Steuern einer Maschine unter Verwendung eines Prozessorsystems mit mehreren Ausführungseinheiten deren jeweiligen Steuerprogramm für redundanten Betrieb identisch ist. Weiterhin offenbart D1 auch, dass mindestens zwei, ein identisches Steuerprogramm aufweisende Datenverarbeitungsanlagen, eine Ein-Ausgabeeinheit zugeordnet ist, die alternativ über jeweils ein identisches Steuerprogramm einer Datenverarbeitungsanlage bedienbar ist.

### Offenbarung der Erfindung

Durch die vorliegende Erfindung werden ein Prozessorsystem und ein Betriebsverfahren dafür geschaffen, die es erlauben, eine dauerhafte Fehlsteuerung im Leistungsbetriebsmodus eines Multiprozessorsystems zu verhindern.

Das Ziel wird dadurch erreicht, dass eine Steuerinformation für eine zu steuernde Maschine, die zunächst von einer ersten der Ausführungseinheiten des Prozessorsystems berechnet und dann an die Maschine gesendet und an dieser verwendet wird, anschließend von einer zweiten der Ausführungseinheiten berechnet wird, um an die Maschine gesendet und dort verwendet zu werden. Ein eventueller dauerhafter Fehler der ersten Ausführungseinheit wirkt sich auf die Berechnung der Steuerinformation durch die zweite Ausführungseinheit nicht aus, so dass nicht fortlaufend falsche Steuerinformationen an die Maschine gesendet werden.

Das Verfahren ist insbesondere anwendbar auf Steuerinformation, die zyklisch wiederholt berechnet wird.

Die Ausführungseinheiten können sich in der Berechnung der Steuerinformation in einer vorgegebenen Reihenfolge abwechseln.

Der Anteil der Zeit, in welcher von einer defekten Ausführungseinheit herrührende fehlerhafte Steuerinformation an der Maschine verwendet wird, an der Gesamtbetriebszeit der Maschine ist umso kleiner, je größer die Zahl der Ausführungseinheiten ist, die zur Berechnung der Steuerinformation zur Verfügung stehen. Wenn die Zahl der Ausführungseinheiten groß genug und wenigstens größer als zwei ist, kann das Prozessorsystem als Ganzes selbst dann noch brauchbar sein, wenn eine der Ausführungseinheiten einen dauerhaften Defekt aufweist.

Eine alternative Möglichkeit ist, dass die Steuerinformation einer Ausführungseinheit zufällig zur Berechnung zugewiesen wird. Die zufällige Auswahl kann unter sämtlichen Ausführungseinheiten getroffen werden oder, bevorzugtermaßen, unter Ausschluss derjenigen Ausführungseinheit, die unmittelbar zuvor die Steuerinformation berechnet hat.

Eine weitere Möglichkeit ist, dass die Steuerinformation einer nicht ausgelasteten Ausführungseinheit zur Berechnung zugewiesen wird. Auch hier kann die Auswahl der nicht ausgelasteten Ausführungseinheit unter allen Ausführungseinheiten oder unter Ausschluss derjenigen Ausführungseinheit, die die Steuerinformation unmittelbar zuvor berechnet hat, erfolgen.

Die Ausführungseinheiten können einander in der Ausführung einer Befehlsfolge, in deren Verlauf die Steuerinformation berechnet wird, in vorgegebenen Zeitabständen abwechseln. Zu diesem Zweck kann beispielsweise in dem Prozessorsystem eine Steuerinstanz vorgesehen sein, die mit einem Zeitgeber verbunden ist, um jeweils ab einem vom Zeitgeber angegebenen Zeitpunkt die Befehle zur Berechnung der gegebenen Größe einer anderen Ausführungseinheit zuzuweisen. Die Zuweisung kann z.B. durch einen Austausch von Programmzählerständen zwischen den Ausführungseinheiten erfolgen.

Eine andere Möglichkeit ist, dass die Ausführungseinheiten einander in der Ausführung einer Befehlsfolge, in deren Verlauf die Steuerinformation berechnet wird, abwechseln, wenn ein in der Befehlsfolge enthaltener Umschaltbefehl gelesen wird. Dies ermöglicht es, die Befehlsfolge in Teilaufgaben zu gliedern, deren Ausführung durch jeweils eine der Ausführungseinheiten weniger Datenaustausch zwischen den Ausführungseinheiten erfordert, als wenn der Wechsel zu ohne Rücksicht auf die Abfolge der Befehle festgelegten Zeiten erfolgt, und verringert so den mit der Zuweisung der Berechnungen an wechselnde Ausführungseinheiten einhergehenden Verwaltungs-Mehraufwand.
Der Wechsel von einer die Befehlsfolge ausführenden Ausführungseinheit zur anderen kann mit Hilfe eines Interrupt-Befehls an die Ausführungseinheiten in zweckmäßiger Weise synchron an allen beteiligten Ausführungseinheiten ausgelöst werden. Quelle des Interrupts kann dabei der Zeitgeber sein, oder diejenige Ausführungseinheit, die den Umschaltbefehl unter den von ihr auszuführenden Befehlen empfängt.

Um sicherzustellen, dass die Steuerinformation nicht zweimal nacheinander von der gleichen Ausführungseinheit berechnet wird, andererseits aber ein Wechsel der Ausführungseinheiten nicht öfter stattfindet als notwendig, ist es zweckmäßig, wenn der Wechsel zwischen den Ausführungseinheiten jeweils zwischen Iterationen eines iterativ ausgeführten Abschnitts der Befehlsfolge erfolgt.

Um bei einem Wechsel der die Befehlsfolge ausführenden Einheit nicht Berechnungen unnötig wiederholen zu müssen, werden bei einem Wechsel zweckmäßigerweise Registerinhalte zwischen den Ausführungseinheiten ausgetauscht.

Diese Ziele werden durch die in den unabhängigen Patentansprüchen 1 sowie 11 definierten Merkmale erreicht. Weitere zweckmäßige Ausgestaltungen werden in den abhängigen Patentansprüchen spezifiziert. Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: ein Blockdiagramm eines Prozessorsystems gemäß einer ersten Ausgestaltung der Erfindung;
- Fig. 2: ein Flussdiagramm eines in der Betriebszustandssteuereinheit und Prozessoren des Prozessorsystems aus Fig. 1 ablaufenden Betriebsverfahrens;
- Fig. 3: ein zu Fig. 2 analoges Flussdiagramm für ein Prozessorsystem mit einer Vielzahl von Ausführungseinheiten;
- Fig. 4: eine schematische Darstellung der zwischen Prozessoren des Systems aus Fig. 1 wechselnden Ausführung einer Aufgabe;
- Fig. 5: ein Blockdiagramm eines Prozessorsystems gemäß einer zweiten Ausgestaltung der Erfindung;
- Fig. 6: ein Blockdiagramm eines Prozessorsystems gemäß einer dritten Ausgestaltung der Erfindung: und
- Fig. 7: ein Blockdiagramm eines Prozessorsystems gemäß einer vierten Ausgestaltung der Erfindung.

### Beschreibung der Ausführungsbeispiele

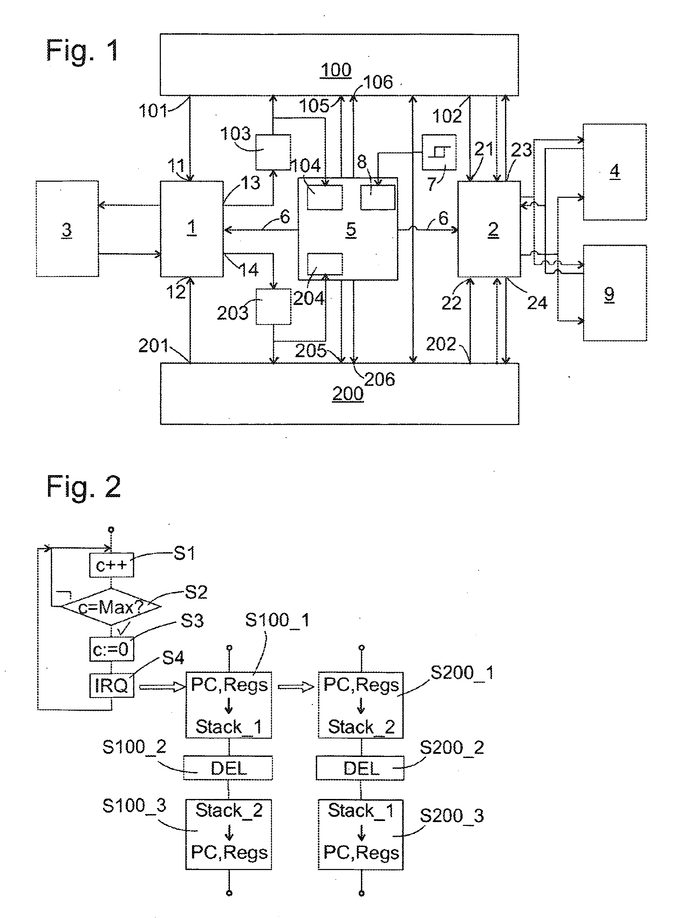

In dem in Fig. 1 gezeigten Datenverarbeitungssystem sind zwei identische Prozessoren jeweils mit 100 bzw. 200 bezeichnet. Die Prozessoren 100, 200, sind hier in erster Linie aus Gründen der übersichtlicheren Darstellung mit jeweils zwei Adressausgängen 101, 102 bzw. 201, 202 dargestellt, von denen die Ausgänge 101, 102 mit einem von den Prozessoren gemeinsam genutzten Festwertspeicher 3 über eine Speicherzugriffssteuereinheit 1 und die Ausgänge 102 und 202 mit einem gemeinsam genutzten Schreib-/Lesespeicher und einer von den Prozessoren 100, 200 gesteuerten Maschine 9 über eine Speicherzugriffssteuereinheit 2 kommunizieren. Die zwei Paare von Ausgängen 101, 102 bzw. 201, 202 können physikalisch existieren; alternativ kann pro Prozessor jeweils ein einziger Ausgang vorhanden sein, an den beide Steuereinheiten 1, 2 angeschlossen sind, wobei in diesem Fall den Steuereinheiten 1, 2 jeweils disjunkte Adressbereiche zur Bearbeitung zugewiesen sind.

Die Steuereinheiten 1, 2 weisen in Zuordnung zu jedem Prozessor 100 bzw. 200 jeweils einen Eingang 11, 12 bzw. 21, 22 auf, um Adressen von den Prozessoren 100, 200 zu empfangen. Die Steuereinheiten 1, 2 haben jeweils zwei Datenausgänge 13, 14 bzw. 23, 24, einen für jeden Prozessor 100 bzw. 200. Jeder Ausgang 13, 14 ist mit dem zugehörigen Prozessor 100 oder 200 über jeweils einen Cache-Speicher 103 bzw. 203 verbunden. An den Ausgang jedes Cache-Speichers 103, 203 ist eine Detektoreinheit 104, 204 angeschlossen, die Teil einer Betriebszustands-Steuereinheit 5 ist. Auf die Funktion der Detektoreinheiten 104, 204 wird an späterer Stelle in Verbindung mit den von der Steuereinheit 5 gesteuerten Betriebszuständen eingegangen.

Da der Speicher 4 ein Schreib-/Lesespeicher ist, in welchem die Prozessoren 100, 200 Zwischenergebnisse ihrer Verarbeitung ablegen und auch zum Steuern der Maschine 9 Schreibzugriffe der Prozessoren auf der Maschine 9 zugeordnete Adressen erforderlich sind, muss die Speicherzugriffs-Steuereinheit 2 in der Lage sein, den Prozessoren 100, 200 sowohl Schreib- als auch Lesezugriff zu vermitteln. Im Falle der auf den Festwertspeicher 3 zugreifenden Steuereinheit 1 genügt lediglich Lesezugriff. Die Einheit 1 kann daher etwas einfacher aufgebaut sein als die Einheit 2. Es können aber auch beide den gleichen Aufbau haben, wobei dann die Fähigkeit Schreibzugriff zu vermitteln, im Falle der Einheit 1 ungenützt bleibt. Falls, wie oben erwähnt, die Adressausgänge 101, 102 bzw. 201, 202 physikalisch identisch sind, können auch die Steuereinheiten 1, 2 durch eine einzige Schaltung implementiert sein, die Zugriff zu beiden Speichern 3, 4 und der Maschine 9 vermittelt.

Die Betriebszustands-Steuereinheit 5 ist eingerichtet, um verschiedene Betriebszustände des Systems einzustellen. Um bei einem Wechsel des Betriebszustandes erforderliche Anpassungen an den Prozessoren 100, 200 zu veranlassen, ist sie mit Interrupt-Eingängen 105, 205 der Prozessoren verbunden. Den Speicherzugriffs-Steuereinheiten 1, 2 wird der jeweils gewählte Betriebszustand über eine Zustandssignalleitung 6 signalisiert.

Ein erster Betriebszustand ist ein Sicherheits-Betriebszustand, in welchem die Prozessoren 100, 200 synchron jeweils identische Anweisungen ausführen. In diesem Betriebszustand vergleicht die Speicherzugriffs-Steuereinheit 1 fortlaufend die an ihren Eingängen 11, 12 empfangenen Adressen und gibt diese nur bei Übereinstimmung an den Festwertspeicher 3 weiter. Bei Nichtübereinstimmung wird eine Fehlerbehebungsroutine ausgelöst, die nicht Gegenstand der Erfindung ist und daher hier nicht beschrieben wird. An der adressierten Zelle des Speichers 3 gelesene Information gibt die Steuereinheit 1 an beide Caches 103, 203 weiter, von wo sie von den Prozessoren 100, 200 übernommen und als Befehl ausgeführt wird.

In entsprechender Weise vergleicht die Speicherzugriffs-Steuereinheit 2 von den Prozessoren 100, 200 empfangene Adressen und, wenn die Adressen zu einem Schreibzugriff gehören, auch die von den Prozessoren ausgegebenen, in den Speicher 4 oder die Maschine 9 zu schreibenden Daten. Nur bei Übereinstimmung der Adressen und ggf. Daten wird der Schreibzugriff ausgeführt; anderenfalls wird die Fehlerbehandlungsprozedur ausgelöst.

Die Prozessoren 100, 200 empfangen beide das gleiche Taktsignal von einem Taktgenerator 7. Um zu verhindern, dass durch externe Störungen identische Verarbeitungsfehler in beiden Prozessoren 100, 200 verursacht werden, kann ein geringfügiger Zeitversatz zwischen den Prozessoren vorgesehen werden, zum Beispiel indem ein Vorgang, der im Prozessor 100 durch eine abfallende Flanke des Taktsignals ausgelöst wird, im Prozessor 200 von einer ansteigenden Flanke ausgelöst wird. So arbeiten die Prozessoren zwar synchron, aber jeweils um eine halbe Taktperiode gegeneinander zeitversetzt.

An den Taktgenerator 7 ist ferner ein zur Betriebszustands-Steuereinheit 5 gerechneter Zähler 8 angeschlossen, dessen Zustand im Sicherheits-Betriebszustand jedoch nicht ausgewertet wird.

Der zweite Betriebszustand ist ein superskalarer Betriebszustand oder Leistungs-Betriebszustand. In diesem Betriebszustand arbeiten die beiden Prozessoren 100, 200 unabhängig voneinander, das heißt ihre Programmzähler können voneinander beliebig verschiedene Werte annehmen, so dass die zwei Prozessoren 100, 200 jeweils Befehlsfolgen ausführen, die in verschiedenen Regionen des Speichers 3 gespeichert sein können. Diese verschiedenen Regionen können verschiedene Adressbereiche eines gleichen Speicherbausteins oder auch unterschiedliche Speicherbausteine sein.

In diesem Leistungs-Betriebszustand gibt die Speicherzugriffs-Steuereinheit 1 jede von einem der Prozessoren 100, 200 empfangene, einen zu lesenden Befehl bezeichnende Adresse ohne Vergleich unverzüglich an den Festwertspeicher 3 weiter. Falls dies nicht innerhalb der gleichen Taktperiode möglich ist, in der die Adresse empfangen wurde, weil bereits ein vom jeweils anderen Prozessor ausgelöster Speicherzugriff im Gang ist, wird die Adresse in einem Puffer der Steuereinheit 1 zwischengespeichert, bis der Speicher 3 bereit ist, eine neue Adresse zu empfangen. Information, die die Steuereinheit 1 aus einer adressierten Zelle des Speichers 3 liest, gibt sie nur an denjenigen Ausgang 13 oder 14 aus, der zu dem Prozessor 100 oder 200 führt, von dem die Steuereinheit 1 zuvor die betreffende Adresse empfangen hatte. So erhält jeder Prozessor aus dem Speicher 3 nur die tatsächlich von ihm benötigten Programmanweisungen.

Lesezugriffe der Prozessoren 100, 200 auf den Schreib-/Lesespeicher 4 über die Steuereinheit 2 laufen in der gleichen Weise wie oben für den Speicher 3 beschrieben ab. Um zu verhindern, dass Schreibzugriffe der Prozessoren 100, 200 einander gegenseitig stören, ist die Steuereinheit 2 zusätzlich mit Pufferspeichern für von den Prozessoren ausgegebene, zu schreibende Daten ausgestattet, die wegen eines laufenden Zugriffs auf den Speicher 4 oder die Maschine 9 nicht sofort weitergegeben werden können.

In dem Leistungs-Betriebszustand führen die Betriebszustands-Steuereinheit 5 und die Prozessoren 100, 200 ein Betriebsverfahren aus, das im Folgenden anhand von Fig. 2 erläutert wird. Mit jedem Takt vom Taktgenerator 7 wird der Inhalt c des Zählers 8 in Schritt S1 um 1 inkrementiert. In Schritt S2 wird geprüft, ob der Zähler 8 den maximalen Zählerstand erreicht hat. Wenn nicht, ändert sich der Zustand der Steuereinheit 5 nicht, sie kehrt zu Schritt S1 zurück, und die Prozessoren 100, 200 arbeiten in üblicher Weise, indem sie den Inhalt ihres Programmzählers PC an die Steuereinheit 1 ausgeben, um einen Befehl aus dem Speicher 1 zu lesen, oder einen von dort gelesenen Befehl ausführen.

Wenn in Schritt S2 ein Überlauf des Zählers 8 festgestellt wird, wird dieser in Schritt S3 zurückgesetzt, und in Schritt S4 sendet die Steuereinheit 5 ein Interrupt-Signal an die Interrupt-Eingänge 105, 205 der zwei Prozessoren 100, 200. Beide Prozessoren 100, 200 führen daraufhin eine für sie spezifische Interrupt-Routine aus. Diese beinhaltet im Falle des Prozessors 100 das Sichern sämtlicher Registerinhalte des Prozessors 100 und seines Programmzählers in einen Speicherbereich Stack_1 des Speichers 4 (S100_1), während gleichzeitig der Prozessor 200 in Schritt S200_1 seine Registerinhalte und den Programmzähler in einen anderen Bereich Stack_2 des Speichers 4 sichert. Falls die Prozessoren 100, 200 Pipeline-Prozessoren sind, werden Register der Befehlspipeline, die bereits aus dem Speicher 3 gelesene, aber noch nicht vom Prozessor 100 bzw. 200 ausgeführte Befehle enthalten, in SchrittS100_2 bzw. S200_2 gelöscht. Anschließend lädt der Prozessor 100 in Schritt S100_3 aus dem Speicherbereich Stack_2 Registerinhalte und Programmzähler zurück, und der Prozessor 200 tut das gleiche in Schritt S200_3 aus dem Speicherbereich Stack_1. Nach Ausführung dieser Interrupt-Prozeduren sind die Registerinhalte und Programmzählerwerte zwischen den Prozessoren ausgetauscht, so dass eine vor dem Interrupt vom Prozessor 100 bearbeitete Befehlsfolge nach dem Interrupt von Prozessor 200 fortgesetzt wird, und umgekehrt.

Im Falle eines Prozessorsystems mit nur zwei Prozessoren, wie oben angenommen, wird durch diese Maßnahme erreicht, dass im Falle eines Defektes in einem der Prozessoren 100 bzw. 200 jede Befehlsfolge im zweiten Betriebszustand während der Hälfte der Zeit korrekt ausgeführt wird. Eine fehlerhafte Ausführung während der restlichen Zeit kann bei dem System der Fig. 1 für begrenzte Zeit hingenommen werden, da das Auftreten eines dauerhaften Defektes in einem der Prozessoren 100, 200 spätestens beim nächsten Übergang des Systems in den Sicherheits-Betriebszustand erfasst wird, so dass Maßnahmen zu seiner Behebung veranlasst und ein sicherheitsgefährdender Betrieb der Maschine 9 bis dahin unterbunden werden kann.

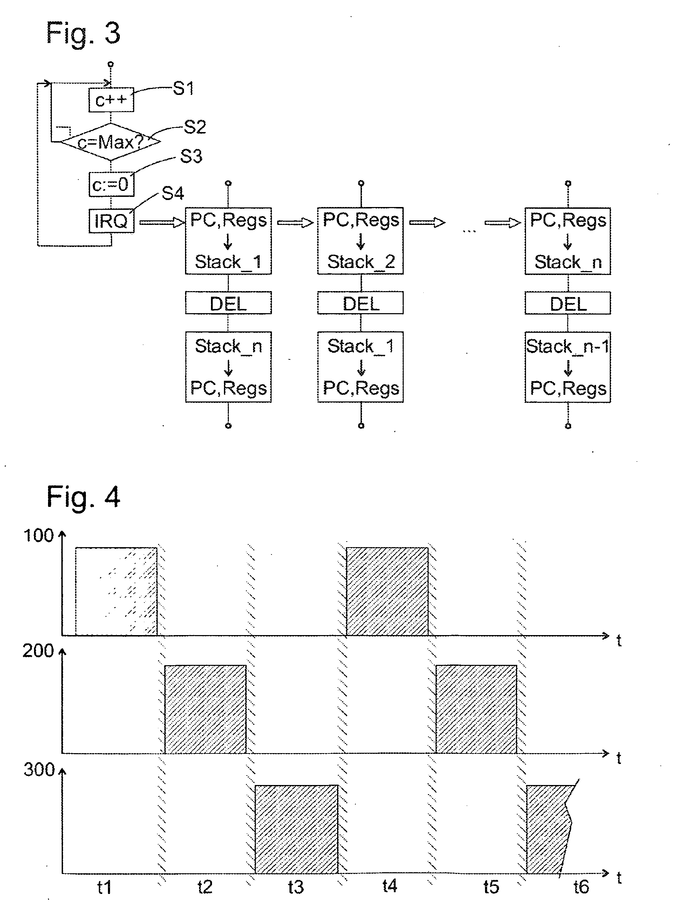

Je größer die Zahl der Prozessoren in einem Multiprozessorsystem ist, um so kleiner kann die Auswirkung eines dauerhaften Defektes in einem der Prozessoren gemacht werden. Fig. 3 zeigt einen zu Fig. 2 analogen Verfahrensablauf in einem System mit n identischen Prozessoren. Die in der Betriebszustandssteuereinheit 5 ablaufenden Verfahrensschritte S1 bis S4 sind hier die gleichen wie im Falle der Fig. 2 und brauchen nicht erneut erläutert zu werden. Bei Empfang des Interrupt-Signals von der Steuereinheit 5 sichert in einem ersten Schritt jeder der n Prozessoren seine Registerinhalte und seinen Programmzählerwert in einen ihm zugeordneten Speicherbereich Stack_i, i = 1, 2, ..., n. Im nächsten Schritt lädt der erste Prozessor neue Registerinhalte und einen neuen Programmzählerwert aus dem Speicherbereich Stack_n, und alle anderen jeweils aus dem Speicherbereich Stack_i-1. Auf diese Weise werden die von den Prozessoren abgearbeiteten Befehlsfolgen reihum vertauscht, und der Anteil an der Betriebszeit, in welcher ein defekter Prozessor eine dieser Befehlsfolgen ausführt, reduziert sich auf 1/n.

Fig. 4 veranschaulicht diesen Sachverhalt für den Fall von n=3 Prozessoren 100, 200, 300, denen jeweils ein Zeitablaufdiagramm in Fig. 4 zugeordnet ist. Eine in einem ersten Zeitintervall Δt1 vom Prozessor 100 ausgeführte Befehlsfolge, symbolisiert durch ein schraffiertes Rechteck, wird nach einer zur Ausführung des Interrupts benötigten Zeitspanne in einem Zeitintervall Δt2 vom Prozessor 200 und nach einem erneuten Interrupt, in einem Zeitintervall Δt3, vom Prozessor 300 fortgesetzt. In nachfolgenden Zeitintervallen Δt4, Δt5, Δt6 wiederholt sich der Vorgang zyklisch. Entsprechend werden auch in dem Diagramm nicht dargestellte, im Zeitintervall Δt1 vom Prozessor 200 bzw. dem Prozessor 300 ausgeführte Befehlsfolgen reihum unter den Prozessoren ausgetauscht.

Ein Problem des in Fig. 1 gezeigten Prozessorsystems liegt darin, dass wenn ein solches System zur Steuerung der Maschine 9 in Echtzeit eingesetzt wird, die Frequenz, mit der eine bestimmte Steuerinformation für die Maschine 9 neu berechnet werden muss, variieren kann. Wenn die von den Prozessoren ausgeführten Befehlsfolgen in festen Zeitabständen ausgetauscht werden, kann es daher vorkommen, dass eine von dem Prozessorsystem zu berechnende und zur Steuerung der Maschine 9 an diese zu sendende Steuerinformation zwischen zwei Interrupts mehrfach oder gar nicht neu berechnet wird. Beides kann zur Folge haben, dass die Steuerinformation viele Male nacheinander von dem gleichen Prozessor berechnet wird, was bei einem Defekt dieses Prozessors inakzeptable Folgen haben kann. Eine Möglichkeit, diesem Problem Rechnung zu tragen, ist, den Austausch der ausgeführten Befehlsfolgen zwischen den Prozessoren nicht nach einem vorab festgelegten Muster, sondern zufallsgesteuert vorzunehmen. Wenn im einfachsten Fall eines Prozessorsystems mit zwei Prozessoren, wie in Fig. 1 dargestellt, der Zeitabstand zwischen zwei Neuberechnungen einer gleichen Steuerinformation zufällig der Zeitspanne von einem Interrupt bis zum übernächsten entspricht, so würde im Falle des mit Bezug auf Fig. 2 beschriebenen Verfahrens die Steuerinformation stets von dem gleichen Prozessor berechnet. Wird jedoch bei jedem Überlauf des Zählers 8 zufallsgesteuert entschieden, ob die bisher vom Prozessor 100 bearbeitete Befehlsfolge von diesem oder vom Prozessor 200 weiterbearbeitet wird, so reduziert sich die Wahrscheinlichkeit, dass die Berechnung m Male nacheinander vom gleichen Prozessor vorgenommen wird, auf 2^{-m}.

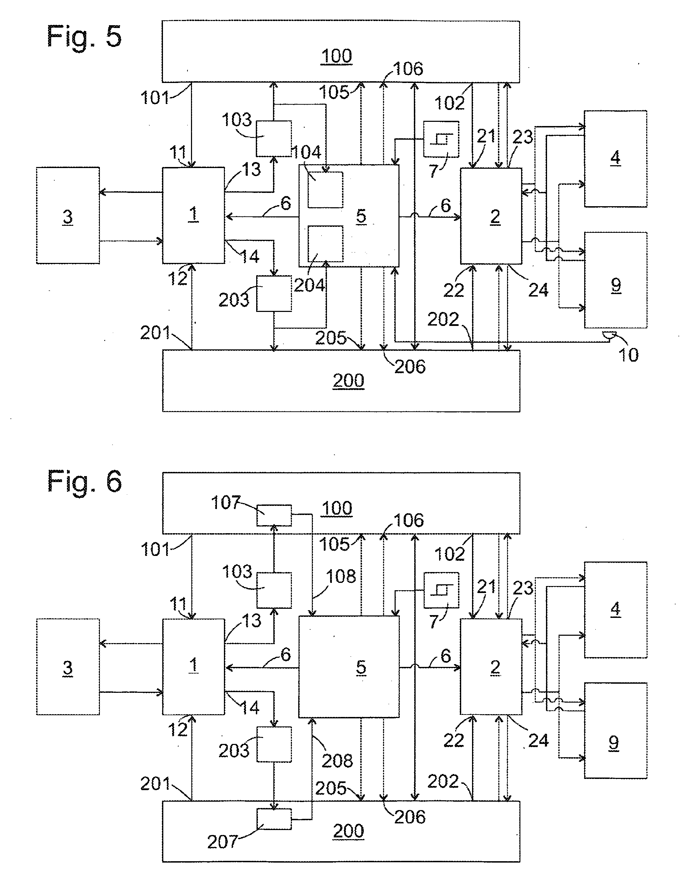

Eine andere Möglichkeit, die wiederholte Berechnung einer gleichen Steuerinformation durch denselben Prozessor zu vermeiden, wird anhand von Fig. 5 dargestellt. Hier ist anstelle des Zählers 8 ein Sensor 10 mit der Betriebszustands-Steuereinheit 5 verbunden, der an der Maschine 9 angeordnet ist, um ein periodisch wiederkehrendes Ereignis an der Maschine zu erfassen, dessen Periode verknüpft ist mit der Periode, mit welcher eine gegebene Steuerinformation für die Maschine 9 neu berechnet werden muss. So kann zum Beispiel, wenn die Maschine 9 ein Verbrennungsmotor eines Kraftfahrzeuges ist, und die Steuerinformation eine in einen Zylinder des Verbrennungsmotors einzuspritzende Kraftstoffmenge, einen Einspritzzeitpunkt oder einen Zündzeitpunkt spezifiziert, der Sensor 10 an einer Kurbelwelle des Motors angeordnet sein, um jeweils den Zeitpunkt zu erfassen, an welchem die Kurbelwelle eine Referenzphasenlage durchläuft.

Indem die Betriebszustands-Steuereinheit 5 einen Interrupt, wie mit Bezug auf Figuren 2, 3 beschrieben, bei jedem Durchgang der Kurbelwelle durch die Referenzphasenlage auslöst, ist gewährleistet, dass eine Steuergröße für den Motor in jeder Umdrehung der Kurbelwelle von einem anderen Prozessor berechnet wird. Außerdem kann durch passende Auswahl der Referenzphasenlage sichergestellt werden, dass ein Interrupt nicht zu einer Zeit ausgelöst wird, wo er die Prozessoren an der rechtzeitigen Berechnung der Steuergröße hindert.

Eine weitere Möglichkeit, den Austausch der jeweils ausgeführten Befehlsfolgen zwischen den Prozessoren zeitlich zu steuern, ist, Austauschbefehle - wie auch Befehle zum Umschalten zwischen dem ersten und dem zweiten Betriebszustand - in die im Speicher 3 gespeicherten Befehlsfolgen selbst einzufügen. Wenn ein solcher Austauschbefehl von einer der Detektoreinheiten 104, 204 der Ausgestaltungen von Fig. 1 oder Fig. 5 erfasst wird, reagiert die Betriebszustands-Steuereinheit 5 darauf durch Ausgabe eines Interrupt-Befehles an die Interrupt-Eingänge 105, 205 der Prozessoren 100, 200, woraufhin die Prozessoren jeweils die mit Bezug auf Fig. 2 oder 3 beschriebenen Interrupt-Prozeduren ausführen.

Ein solcher programmgesteuerter Austausch kann erfindungsgemäß in einem Prozessorsystem als einziger Austauschmechanismus oder in Kombination mit einem zeitgesteuerten Austausch, wie er vom Zähler 8 gemäß Fig. 1 ausgelöst wird, oder einem ereignisgesteuerten Austausch, wie er vom Sensor 10 der Fig. 5 ausgelöst wird, eingesetzt werden.

Die Verwendung der Detektoreinheiten 104, 204 ermöglicht es, als Prozessoren 100, 200 herkömmliche Prozessoren zu verwenden, zu deren Befehlssatz der Austauschbefehl nicht gehört. Wenn der Austauschbefehl zum Befehlssatz der Prozessoren 100, 200 gehört, können, wie in Fig. 6 gezeigt, die Detektoreinheiten 104, 204 entfallen, und ihre Aufgabe wird wahrgenommen von Befehlsdecodern 107, 207 der Prozessoren 100, 200, die jeweils auf die Erkennung eines Austauschbefehls reagieren durch Ausgabe eines Austauschsignals an die Betriebszustands-Steuereinheit 5 über Leitungen 108, 208. Die Betriebszustands-Steuereinheit 5 reagiert darauf durch Senden eines Interrupt-Signals an beide Prozessoren 100, 200, die daraufhin die mit Bezug auf Fig. 2 beschriebene Interrupt-Routine ausführen.

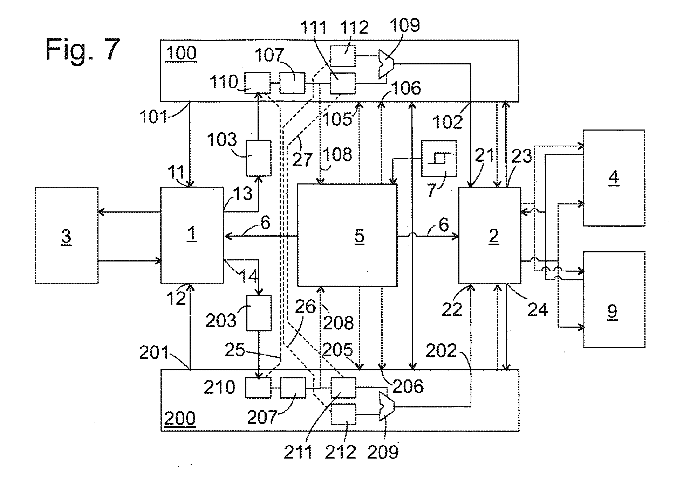

Fig. 7 zeigt eine weitere Ausgestaltung eines Prozessorsystems gemäß der vorliegenden Erfindung, bei der die Prozessoren 100, 200 als Pipeline-Prozessoren ausgeführt sind. Die Pipeline-Prozessoren 100, 200 führen die Verarbeitung von Befehlen in an sich bekannter Weise mit Hilfe von mehreren in einer so genannten Pipeline hintereinandergeschalteten Verarbeitungsstufen aus, von denen eine durch einen Befehlsdecoder 107 bzw. 207 und eine andere durch eine Arithmetik-Logik- Einheit (ALU) 109 bzw. 209 gebildet ist. Jeweils vor diesen Stufen angeordnete Register 110, 111 bzw. 210, 211 dienen zur Zwischenspeicherung von Information aus dem Festwertspeicher 3 vor ihrer Verarbeitung in den einzelnen Stufen. Ein Register für in der ALU 109 bzw. 209 zu verarbeitende Operanden ist mit 112 bzw. 212 bezeichnet. Zueinander homologe Register der zwei Prozessoren 100, 200 sind durch gestrichelt dargestellte Datenquerverbindungen 25, 26, 27 verbunden. Wie bei der Ausgestaltung der Fig. 6 meldet jeder Befehlsdecoder 107 oder 207 den Empfang eines Umschaltbefehls an die Betriebszustands-Steuereinheit 5 über die Leitung 108 bzw. 208. Auf einem daraufhin von der Betriebszustands-Steuereinheit 5 ausgelösten Interrupt reagieren die Prozessoren 100, 200, indem jeweils Inhalte der Register 110, 210 über die Querverbindung 25, zwischen den Registern 111, 211 über die Querverbindung 26 und zwischen den Registern 112, 212 über die Querverbindung 27 ausgetauscht werden. Da der Austausch über die Querverbindungen 25 bis 27 gleichzeitig erfolgen kann, gelingt auf diese Weise ein Austausch des kompletten Prozessorstatus zwischen den Prozessoren 100, 200 wesentlich schneller, als wenn die Registerinhalte der Prozessoren einzeln in einem externen Stack zwischengespeichert werden müssen. Da außerdem sämtliche in den Registern 110, 111, 210, 211 gespeicherten Zwischenergebnisse der Befehlsverarbeitung ausgetauscht werden, ist es nicht erforderlich, bei Auftreten eines Umschaltbefehls die Verarbeitungspipelines der Prozessoren 100, 200 komplett zu entleeren.

Es versteht sich , dass auch bei dem Pipeline-Prozessorsystem ein zeit- oder ereignisgesteuerter Austausch der Prozessorzustände, wie mit Bezug auf Fig.1 und 5 erläutert, anstelle des oder zusätzlich zum programmgesteuerten Austausch stattfinden kann. Auch eine Verallgemeinerung von dem in Fig. 7 gezeigten Zweiprozessorsystem auf ein Multiprozessorsystem, in dem der Prozessorstatus jeweils reihum zwischen den Prozessoren ausgetauscht wird, ist für den Fachmann anhand der obigen Beschreibung offensichtlich.

## Patentansprüche

1. Verfahren zum Steuern einer Maschine (9) unter Verwendung eines Prozessorsystems mit mehreren Ausführungseinheiten (100, 200), bei dem eine Steuerinformation zunächst von einer ersten der Ausführungseinheiten berechnet wird, die von der ersten Ausführungseinheit berechnete Steuerinformation an die Maschine (9) gesendet wird und an der Maschine verwendet wird, **dadurch gekennzeichnet, dass** die Berechnung der Steuerinformation zyklisch wiederholt wird, und dass bei der Wiederholung die Steuerinformation von einer zweiten der Ausführungseinheiten berechnet wird und die von der zweiten Ausführungseinheit berechnete Steuerinformation an die Maschine gesendet und an der Maschine verwendet wird.

2. Verfahren nach Anspruch 1, **dadurch gekennzeichnet, dass** die Ausführungseinheiten (100, 200) sich in der Berechnung der Steuerinformation in einer vorgegebenen Reihenfolge abwechseln.

3. Verfahren nach Anspruch 1, **dadurch gekennzeichnet, dass** die Steuerinformation einer Ausführungseinheit zufällig zur Berechnung zugewiesen wird.

4. Verfahren nach Anspruch 1, **dadurch gekennzeichnet, dass** die Steuerinformation einer nicht ausgelasteten Ausführungseinheit zur Berechnung zugewiesen wird.

5. Verfahren nach einem der vorhergehenden Ansprüche, **dadurch gekennzeichnet, dass** die Ausführungseinheiten (100, 200) einander in der Ausführung einer Befehlsfolge, in deren Verlauf die Steuerinformation berechnet wird, in vorgegebenen Zeitabständen abwechseln.

6. Verfahren nach einem der vorhergehenden Ansprüche, **dadurch gekennzeichnet, dass** die Ausführungseinheiten einander in der Ausführung einer Befehlsfolge, in deren Verlauf die Steuerinformation berechnet wird, abwechseln, wenn ein in der Befehlsfolge enthaltener Umschaltbefehl gelesen wird.

7. Verfahren nach Anspruch 5 oder 6, **dadurch gekennzeichnet, dass** der Wechsel mit Hilfe eines an die Ausführungseinheiten (100, 200) gesendeten Interrupt-Befehls ausgelöst wird.

8. Verfahren nach Anspruch 6 und Anspruch 7, **dadurch gekennzeichnet, dass** der Interrupt von der Ausführungseinheit ausgelöst wird, die den Umschaltbefehl empfängt.

9. Verfahren nach einem der Ansprüche 5 bis 7, **dadurch gekennzeichnet, dass** der Wechsel zwischen den Ausführungseinheiten jeweils zwischen Iterationen eines iterativ ausgeführten Abschnitts der Befehlsfolge erfolgt.

10. Verfahren nach einem der Ansprüche 5 bis 9, **dadurch gekennzeichnet, dass** bei einem Wechsel Registerinhalte zwischen den Ausführungseinheiten ausgetauscht werden (S100_1, S100_3, S200_1, S200_3).

11. Prozessorsystem mit mehreren Ausführungseinheiten (100, 200) zum Steuern einer Maschine (9) mittels Steuerinformationen, bei dem eine Steuerinformation zunächst von einer ersten der Ausführungseinheiten berechnet wird, die von der ersten Ausführungseinheit berechnete Steuerinformation an die Maschine (9) gesendet wird, **dadurch gekennzeichnet, dass** die Berechnung der Steuerinformation zyklisch wiederholt wird, und dass bei der Wiederholung die Steuerinformation von einer zweiten der Ausführungseinheiten berechnet wird und die von der zweiten Ausführungseinheit berechnete Steuerinformation an die Maschine gesendet wird.

12. Prozessorsystem nach Anspruch 11, **dadurch gekennzeichnet, dass** eine Steuerinstanz (5) zum Zuweisen von Befehlen zur Ausführung an die Ausführungseinheiten (100, 200) vorgesehen ist, dass die Steuerinstanz (5) eingerichtet ist, Befehle zur Berechnung einer gegebenen Größe zu unterschiedlichen Zeiten jeweils verschiedenen der Ausführungseinheiten (100, 200) zur Ausführung zuzuweisen.

13. Prozessorsystem nach Anspruch 12, **dadurch gekennzeichnet, dass** die Steuerinstanz (5) mit einem Zeitgeber (8) verbunden ist, um zu jeweils ab einem vom Zeitgeber (8) angegebenen Zeitpunkt die Befehle zur Berechnung der gegebenen Größe einer anderen Ausführungseinheit zuzuweisen.

14. Prozessorsystem nach Anspruch 13, **dadurch gekennzeichnet, dass** eine vorgegebene Reihenfolge, in der die Steuerinstanz die Befehle den Ausführungseinheiten zuweist, in dem Prozessorsystem festgelegt ist.

15. Prozessorsystem nach einem der Ansprüche 12 bis 14, **dadurch gekennzeichnet, dass** die Steuerinstanz (5) Mittel (104, 204) zum Erkennen eines Umschaltbefehls in von den Ausführungseinheiten (100, 200) auszuführenden Befehlen aufweist und eingerichtet ist, bei Erkennung eines Umschaltbefehls die von einer ersten der Ausführungseinheiten ausgeführten Befehle zur Berechnung der gegebenen Größe einer zweiten der Ausführungseinheiten zuzuweisen.

16. Prozessorsystem nach einem der Ansprüche 12 bis 15, **dadurch gekennzeichnet, dass** die Ausführungseinheiten (100, 200) eine Pipeline zur Befehlsverarbeitung aufweisen und eingerichtet sind, einen Befehl zum Löschen der Pipeline von einer jeweils anderen Ausführungseinheit oder von der Steuerinstanz (5) zu empfangen.

17. Prozessorsystem nach einem der Ansprüche 12 bis 16, **dadurch gekennzeichnet, dass** die Anzahl der Ausführungseinheiten größer als zwei ist.

## Claims

1. Method for controlling a machine (9) using a processor system having a plurality of execution units (100, 200), in which an item of control information is first of all calculated by a first of the execution units, and the control information calculated by the first execution unit is transmitted to the machine (9) and is used in the machine, **characterized in that** the calculation of the control information is repeated cyclically, and **in that**, during the repetition, the control information is calculated by a second of the execution units and the control information calculated by the second execution unit is transmitted to the machine and is used in the machine.

2. Method according to Claim 1, **characterized in that** the execution units (100, 200) alternate in the calculation of the control information in a predefined order.

3. Method according to Claim 1, **characterized in that** the control information is randomly allocated to an execution unit for calculation.

4. Method according to Claim 1, **characterized in that** the control information is allocated to an execution unit, which is not being used to the full, for calculation.

5. Method according to one of the preceding claims, **characterized in that** the execution units (100, 200) alternate in the execution of an instruction sequence, in the course of which the control information is calculated, at predefined intervals of time.

6. Method according to one of the preceding claims, **characterized in that** the execution units alternate in the execution of an instruction sequence, in the course of which the control information is calculated, if a changeover instruction contained in the instruction sequence is read.

7. Method according to Claim 5 or 6, **characterized in that** the changeover is triggered with the aid of an interrupt instruction which is transmitted to the execution units (100, 200).

8. Method according to Claim 6 and Claim 7, **characterized in that** the interrupt is triggered by the execution unit which receives the changeover instruction.

9. Method according to one of Claims 5 to 7, **characterized in that** the changeover between the execution units is respectively effected between iterations of a section of the instruction sequence which is executed iteratively.

10. Method according to one of Claims 5 to 9, **characterized in that,** in the event of a changeover, register contents are interchanged (S100_1, S100_3, S200_1, S200_3) between the execution units.

11. Processor system having a plurality of execution units (100, 200) for controlling a machine (9) by means of control information, in which an item of control information is first of all calculated by a first of the execution units, and the control information calculated by the first execution unit is transmitted to the machine (9), **characterized in that** the calculation of the control information is repeated cyclically, and **in that**, during the repetition, the control information is calculated by a second of the execution units and the control information calculated by the second execution unit is transmitted to the machine.

12. Processor system according to Claim 11, **characterized in that** a control entity (5) for allocating instructions for execution to the execution units (100, 200) is provided, and **in that** the control entity (5) is set up to allocate instructions for calculating a given variable at different times to respectively different ones of the execution units (100, 200) for execution.

13. Processor system according to Claim 12, **characterized in that** the control entity (5) is connected to a timer (8) in order to respectively allocate the instructions for calculating the given variable to another execution unit from a point in time specified by the timer (8).

14. Processor system according to Claim 13, **characterized in that** a predefined order in which the control entity allocates the instructions to the execution units is defined in the processor system.

15. Processor system according to one of Claims 12 to 14, **characterized in that** the control entity (5) has means (104, 204) for detecting a changeover instruction in instructions to be executed by the execution units (100, 200) and is set up to allocate the instructions for calculating the given variable, which are executed by a first of the execution units, to a second of the execution units when a changeover instruction is detected.

16. Processor system according to one of Claims 12 to 15, **characterized in that** the execution units (100, 200) have a pipeline for processing instructions and are set up to receive an instruction for erasing the pipeline from a respective different execution unit or from the control entity (5).

17. Processor system according to one of Claims 12 to 16, **characterized in that** the number of execution units is greater than two.

## Revendications

1. Procédé de commande d'une machine (9) par recours à un système de processeur qui présente plusieurs unités d'exécution (100, 200),
dans lequel une information de commande est d'abord calculée par une première des unités d'exécution,
l'information de commande calculée par la première unité d'exécution étant envoyée à la machine (9) et utilisée sur la machine,
**caractérisé en ce que**
le calcul de l'information de commande est répété cycliquement et
**en ce que** lors de la répétition? l'information de commande est calculée par une deuxième des unités d'exécution et l'information de commande calculée par la deuxième unité d'exécution est envoyée à la machine et utilisée sur la machine.

2. Procédé selon la revendication 1, **caractérisé en ce que** les unités d'exécution (100, 200) s'alternent dans le calcul de l'information des commandes dans une succession prédéterminée.

3. Procédé selon la revendication 1, **caractérisé en ce que** le calcul de l'information de commande est attribué aléatoirement à une unité d'exécution.

4. Procédé selon la revendication 1, **caractérisé en ce que** le calcul de l'information de commande est attribué à une unité d'exécution qui n'est pas complètement chargée.

5. Procédé selon l'une des revendications précédentes, **caractérisé en ce que** les unités d'exécution (100, 200) s'alternent mutuellement à des intervalles de temps prédéterminés dans l'exécution d'une succession d'ordres au cours de laquelle l'information de commande est calculée.

6. Procédé selon l'une des revendications précédentes, **caractérisé en ce que** les unités d'exécution s'alternent mutuellement dans l'exécution d'une succession d'ordres au cours de laquelle l'information de commande est calculée lorsqu'un ordre de commutation que contient la succession d'ordre est lu.

7. Procédé selon les revendications 5 ou 6, **caractérisé en ce que** l'alternance est déclenchée à l'aide d'un ordre d'interruption envoyé aux unités d'exécution (100, 200).

8. Procédé selon la revendication 6 et la revendication 7, **caractérisé en ce que** l'interruption est déclenchée par l'unité d'exécution qui reçoit l'ordre de commutation.

9. Procédé selon l'une des revendications 5 à 7, **caractérisé en ce que** chaque alternance entre les unités d'exécution a lieu entre des itérations d'une partie exécutée itérativement de la succession d'ordres.

10. Procédé selon l'une des revendications 5 à 9, **caractérisé en ce que** lors d'une alternance, le contenu des registres (S100_1, S100_3, S200_1, S200_3) est échangé entre les unités d'exécution.

11. Système de processeur qui présente plusieurs unités d'exécution (100, 200) pour commander une machine (9) au moyen d'informations de commande,
dans lequel une information de commande est d'abord calculée par une première des unités d'exécution,
l'information de commande calculée par la première unité d'exécution étant envoyée à la machine (9),
**caractérisé en ce que**
le calcul de l'information de commande est répété cycliquement et **en ce que** lors de la répétition, l'information de commande est calculée par une deuxième des unités d'exécution et l'information de commande calculée par la deuxième unité d'exécution est envoyée à la machine.

12. Système de processeur selon la revendication 11, **caractérisé en ce qu'**une instance de commande (5) est prévue pour attribuer des ordres d'exécution aux unités d'exécution (100, 200) et **en ce que** l'instance de commande (5) est conçue pour attribuer à des instants différents l'exécution des ordres de calcul d'une grandeur prédéterminée à différentes unités d'exécution (100, 200).

13. Système de processeur selon la revendication 12, **caractérisé en ce que** l'instance de commande (5) est reliée à une horloge (8) pour attribuer à partir d'un instant indiqué par l'horloge (8) les ordres de calcul de la grandeur donnée à une autre unité d'exécution.

14. Système de processeur selon la revendication 13, **caractérisé en ce qu'**une succession prédéterminée dans laquelle l'instance de commande attribue les ordres aux unités d'exécution est définie dans le système de processeur.

15. Système de processeur selon l'une des revendications 12 à 14, **caractérisé en ce que** l'instance de commande (5) présente des moyens (104, 204) de détection d'un ordre de commutation dans les ordres qui doivent être exécutés par les unités d'exécution (100, 200) et est conçue de telle sorte que lors de la détection d'un ordre de commutation, les ordres de calcul de la grandeur définie exécutée par une première des unités d'exécution sont attribués à une deuxième des unités d'exécution.

16. Système de processeur selon l'une des revendications 12 à 15, **caractérisé en ce que** les unités d'exécution (100, 200) présentent un pipeline de traitement des ordres et sont conçues pour recevoir un ordre d'effacement du pipeline d'une des autres unités d'exécution ou de l'instance de commande (5).

17. Système de processeur selon l'une des revendications 12 à 16, **caractérisé en ce que** le nombre des unités d'exécution est supérieur à deux.
